# EUROPÄISCHE PATENTSCHRIFT

(11) **EP 3 255 329 B1**
(45) Veröffentlichungstag und Bekanntmachung des Hinweises auf die Patenterteilung: **27.05.2020**
(21) Anmeldenummer: 17173925.3
(22) Anmeldetag: 01.06.2017
(51) Int. Cl.: F16L 19/02, F16L 27/11, F16L 55/033

(54) **ROHRLEITUNGSFITTING MIT SCHWINGUNGSKOMPENSATOR**
PIPE FITTING WITH VIBRATION COMPENSATOR
RACCORD FILETÉ DE TUYAU À COMPENSATION DE VIBRATIONS

(30) Priorität: 07.06.2016 CH 7242016
(43) Veröffentlichungstag der Anmeldung: 13.12.2017
(73) Patentinhaber: Aborra AG, 8103 Unterengstringen (CH)
(72) Erfinder: Reichen, Fredy, 6020 Emmenbrücke (CH); Civelek, Resat, 8803 Rüschlikon (CH)
(74) Vertreter: Schneider Feldmann AG Patent- und Markenanwälte

(56) Entgegenhaltungen:
- EP-A2- 2 133 613
- DE-A1-102007 050 655
- DE-U- 1 929 827
- DE-U1- 9 420 502
- DE-U1- 29 614 098
- US-A- 3 501 171
- US-A- 5 819 807

## Beschreibung

### Technisches Gebiet

Die vorliegende Erfindung beschreibt ein Pressfittingsystem mit einem Rohrleitungsfitting zur indirekten Verbindung eines ersten Rohranschlusses mit einem zweiten Rohranschluss, umfassend Anschlussstützelemente, wobei Pressverbindungen zwischen den ersten und zweiten Anschlussstützelementen des Rohrleitungsfittings mit einem ersten und zweiten Pressverbindungsflansch an einem ersten und zweiten Pressverbindungsanschluss in Richtung der Längsrichtung des Rohrleitungsfittings erreichbar sind, wobei mittels jeweils einer Überwurfmutter die ersten und zweiten Anschlussstützelemente in Längsrichtung gegen den ersten und zweiten Pressverbindungsflansch dauerhaft pressbar sind.

### Stand der Technik

Rohrleitungsfittings oder Rohrleitungsverbindungen werden zur Verbindung von Rohrleitungen seit langem in unterschiedlichen Ausführungsformen verwendet. Heute ist das Pressen in der kommerziellen Installationstechnik die vorherrschende Verbindungstechnik. Pressfittings sind heute in einer Vielzahl von Ausgestaltungen bekannt. Sie weisen meist eine Presshülse auf, die mittels eines Presswerkzeuges radial verformt wird, wodurch das von der Presshülse umgebende Ende des Rohranschlusses gegen einen Stutzkörper des Fittings gedrückt und abgedichtet wird. Derartige Pressfittings werden mittels einer Presszange mit dem Kupfer-, Stahl- oder Mehrschichtverbundrohr verpresst. Presswerkzeug sorgt für unlösbare Befestigung eines Rohranschlusses an einem Rohrleitungsfitting, wobei fluiddichte dauerhafte Verbindung erreichbar ist.

Diese Fittings sind vergleichsweise teuer, die Vorteile ergeben sich aus der Zeitersparnis und Einfachheit der Montage. Damit auch Heimwerker die Rohrleitungsfittinge verwenden können, müssen diese sich entsprechende Rohrleitungfittinge und das geeignete Presswerkzeug beschaffen. Da die Presswerkzeuge, bzw. deren Pressbacken, auf zu verpressende Rohrenden und Rohrleitungsfittinge abgestimmt sind, sind markenkompatible Presswerkzeuge, beispielsweise der Firmen Geberit, Nussbaum, Viega, Klauke oder Novopress nötig, welche dann entsprechende Ausführungsformen der Rohrleitungsfittinge verpressen können.

Neben der Problematik, dass die Presswerkzeuge auf die Rohrleitungsfittinge angepasst sein müssen und die Rohrleitungsfittinge nach der Installation nicht mehr demontierbar sind, tritt vereinzelt eine unzureichende nicht anhaltende Abdichtung zwischen den Rohrleitungsfittingen und den Rohrleitungen auf, was ebenfalls nachteilig ist. Auch ist bislang kaum eine flexible Rohrverbindung zur Absorption von Rohrausdehnungen, Rohrabweichungen, Schwingungen und Geräuschen möglich, da die Fixierung mechanisch möglichst stabil ausgeführt sein sollte.

Weitere, aus dem Stand der Technik bekannte Rohrleitungsfittinge werden in den Dokumenten EP 2 133 613 A2 und US 3,501,171 A offenbart, welche einen ersten Rohranschluss mit einem zweiten Rohranschluss verbinden.

### Darstellung der Erfindung

Die vorliegende Erfindung hat sich zur Aufgabe gestellt ein Pressfittingsystem mit einem Rohrleitungsfitting zu schaffen, wobei der Rohrleitungsfitting einfach und demontierbar befestigbar ist, wobei bei der Montage auf spezielle markenkompatible Presswerkzeuge verzichtet werden kann. Es soll eine fluiddichte Verbindung der Rohrleitungen erreicht werden, wobei eine Absorption von Rohrausdehnungen, Schwingungen und Geräuschen zusätzlich geschaffen wird. Der Rohrleitungsfitting bzw. das Pressfittingsystem erreicht eine elektrische Entkopplung sowie eine Schallentkopplung zwischen den Rohrleitungen.

Diese Aufgabe erfüllt ein Pressfittingsystem mit den Merkmalen des Patentanspruches 1.

Das geschaffene Rohrleitungsfitting weist einen elastischen Schwingungskompensator auf und ist mit handelsüblichen Werkzeugen montierbar und demontierbar gestaltet.

### Kurze Beschreibung der Zeichnungen

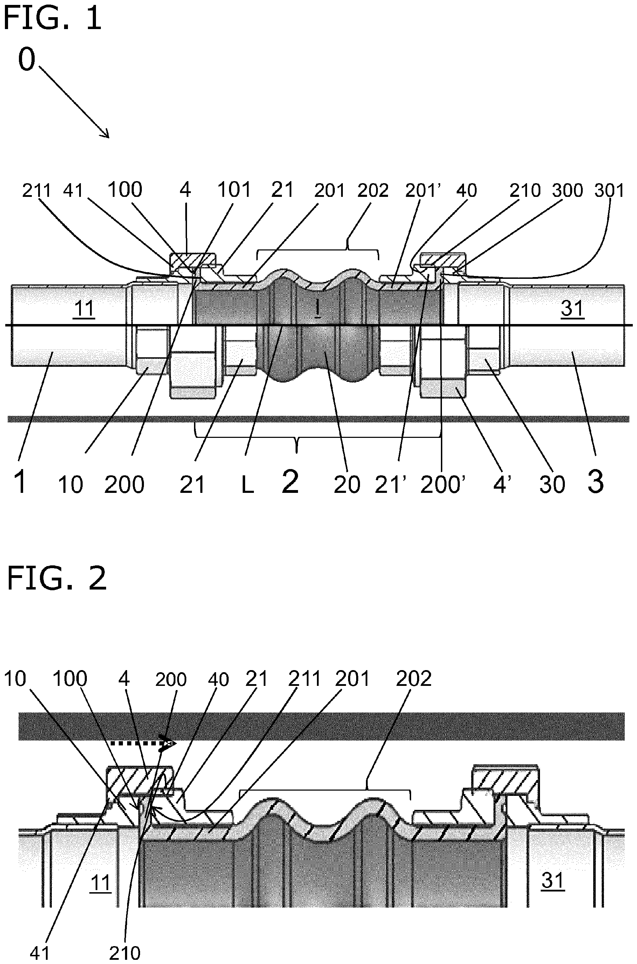

Weitere Merkmale, Einzelheiten und Vorzüge der Erfindung ergeben sich aus der nachfolgenden Beschreibung bevorzugter Ausführungsformen der Erfindung sowie der Zeichnungen. Es ist dargestellt in
- Figur 1: eine Längsansicht mit teilweiser Längsschnittansicht eines Rohrleitungsfittings zwischen einem ersten Rohranschluss und einem zweiten Rohranschluss.
- Figur 2: zeigt eine Schnittansicht des Übergangs des ersten Rohranschlusses zum Rohrleitungsfitting in einer Detailansicht.

### Beschreibung

Es wird ein Pressfittingsystem 0 beschrieben, umfassend einen ersten Rohranschluss 1 und einen zweiten Rohranschluss 3, welche indirekt mittels eines Rohrleitungsfittings 2 bzw. einer Rohrleitungsverbindung verbunden sind. Aufgrund der Konstruktion des Rohrleitungsfittings 2 ist hier eine Montage und Demontage des Rohrleitungsfittings 2 von den Rohranschlüssen 1, 3 möglich. Das Rohrleitungsfitting 2 erstreckt sich in Richtung einer Längsachse L zwischen den Rohranschlüssen 1, 3. An den Rohranschlüssen 1, 3 sind entsprechende Mittel zur Befestigung des Rohrleitungsfittings 2 angeordnet.

Das Rohrleitungsfitting 2 umfasst einen Schwingungskompensator 20, welcher einstückig aus einem elastischen Material, bevorzugt aus einem Material auf Kautschukbasis ausgeführt ist. Der Schwingungskompensator 20 ist im Wesentlichen rohr- bzw. schlauchförmig mit einem Innenraum I ausgestaltet. An den Randbereichen des Schwingungskompensators 20 sind jeweils Anschlussstützelemente 21, 21' als Teile des Rohrleitungsfittings 2 angeordnet.

Der Schwingungskompensator 20 wird von einem elastischen Balg 202, hier insbesondere als Mehrfachbalg 202 ausgebildet und jeweils endständig von einem Fittingschlauchabschnitt 201, 201' und einem Dichtring 200, 200' gebildet. Der Fittingschlauchabschnitt 201, 201 wird von dem Anschlussstützelement 21, 21', ausserhalb des Innenraums I umgebend, umfasst, während der Mehrfachbalg 202 frei liegt. Der Mehrfachbalg 202 ist hier als Doppelbalg ausgestaltet. Im Bereich der Fittingschlauchabschnitte 201, 201' und der Dichtringe 200, 200' und damit im Randbereich des Schwingungskompensators 20 findet die Pressverbindung statt. Die Dichtringe 200, 200' ragen radial von der Längsachse L abgekröpft weg.

Die Anschlussstützelemente 21, 21' sind ringförmig ausgebildet und umgeben die Fittingschlauchabschnitte 201, 201' radial von einer Längsachse L des Schwingungskompensators 20 beabstandet im Randbereich. Die Anschlussstützelemente 21, 21' können im Randbereich des Schwingungskompensators 20, ausserhalb des Innenraums I an der Aussenwand, stoffschlüssig befestigt sein, insbesondere durch Verkleben oder Verschweissen.

Auf der von den Fittingschlauchabschnitten 201, 201' abgewandten Seite der Anschlussstützelemente 21, 21' sind jeweils Aussengewinde 210 von den Fittingschlauchabschnitten 201, 201' wegragend angeordnet. In Richtung der Längsachse L, nach aussen weisend, sind Anschlussflansche 211 an den Anschlussstützelementen 21, 21' angeordnet.

Um eine Verpressung der stirnseitigen Abschnitte des Rohrleitungsfittings 2 mit dem ersten und zweiten Rohranschluss 1, 3 zu erreichen werden hier Überwurfmuttern 4, 4' im Randbereich des Rohrleitungsfittings 2 verwendet. Die Überwurfmuttern 4, 4' sind hier als Sechskantmuttern ausgestaltet und weisen jeweils ein Innengewinde 40 auf. An jeder Überwurfmutter 4, 4' ist ein Rand 41 in Richtung Längsachse L ragend angeformt. Hier zieht die Überwurfmutter 4, 4' die erste Rohrleitung 11 in Richtung Balg 202, wodurch eine fluiddichte Verbindung erreichbar ist. Es ist aber auch eine derart abgewandelte Ausführung möglich, dass das Rohrleitungsfitting 2 in Richtung der ersten Rohrleitung 11 und/oder der zweiten Rohrleitung 31 gezogen wird.

Die Rohranschlüsse 1, 3 sind endständig unlösbar mit einem ersten und zweiten Pressverbindungsanschluss 10, 30, welche in Richtung Rohrleitungsfitting 2 ragen, ausgestattet. Diese Pressverbindungsanschlüsse 10, 30 umgeben die erste und zweite Rohrleitung 11, 31 konzentrisch und weisen hier an ihren Aussenseiten eine Mehrkantform auf. Auf der zum Rohrleitungsfitting 2 weisenden Stirnfläche weisen die Pressverbindungsanschlüsse 10, 30 jeweils einen Pressverbindungsflansch 100, 300 auf, in welchen hier eine konzentrisch umlaufende Rippe 101, 301 eingeformt ist.

Um nun eine fluiddichte Verbindung der ersten Rohrleitung 11 mit der zweiten Rohrleitung 31 mittels Rohrleitungsfitting 2 zu erreichen, werden der erste und zweite Pressverbindungsanschluss 10, 30 an die Anschlussstützelemente 21, 21' geflanscht. Dazu wird der erste Rohranschluss 1 mit seinem ersten Pressverbindungsanschluss 10 an den Dichtring 200 des Schwingungskompensators 20 angesetzt. Dabei wird der Pressverbindungsflansch 100 auf den Dichtring 200 in Richtung Anschlussflansch 211 des Anschlussstützelements 21 gepresst. Der Dichtring 200 wird zwischen Pressverbindungsflansch 100 und Anschlussflansch 211 gequetscht. Dabei findet die Verpressung durch das Anflanschen in Richtung der Längsachse L statt.

Um das Anflanschen dauerhaft zu erreichen, wird die Überwurfmutter 4 über den Flanschabschnitt geschoben, wobei das Innengewinde 40 der Überwurfmutter 4 mit dem Aussengewinde 210 des Anschlussstützelements 21 zusammenwirkt. Der Rand 41 der Überwurfmutter 4 drückt den ersten Pressverbindungsanschluss 10 in Richtung Anschlussstützelement 21, was mit dem gestrichelten Pfeil angedeutet ist. Nach dem Anflanschen ist eine fluiddichte Verbindung erreicht, wobei die Überwurfmutter 4 mit einfachem handelsüblichem Werkzeug festgeschraubt werden kann. Durch die Elastizität des Schwingungskompensators 20 bzw. des Dichtringes 200 kann die Verbindung auch wieder gelöst werden und neu erstellt werden, wobei immer eine fluiddichte Verbindung erreichbar ist. Beim Pressvorgang findet eine leichte Verformung des Dichtringes 200 statt, wobei das Rohrleitungsfitting 2 einfach ersetzt werden kann.

Zusätzlich ist hier die umlaufende Rippe 101 als erhabene Dichtrippe am Pressverbindungsflansch 100 vorgesehen. Diese umlaufende Rippe 101 wird beim Anflanschen teilweise in den gegenüberliegenden elastischen Dichtring 200 gepresst, womit dauerhaft verhindert werden kann, dass ein Fluid aus dem Innenraum I heraustritt.

Durch die einfache aufschraubbare Ausführung der Überwurfmuttern 4, 4', wodurch die Flanschverbindung erreichbar ist, sind keine speziellen Werkzeuge nötig. Durch Ausbildung der Dichtringe 200 ist die Abdichtung des Innenraums I optimiert.

Der Schwingungskompensator 20 ist hier einstückig aus einem Kautschukmaterial, insbesondere aus einem Synthesekautschuk wie Nitrilkautschuk, ChloroprenKautschuk oder einem Ethylen-Propylen-Dien-Kautschuk hergestellt ist. Der Schwingungskompensator 20 absorbiert mechanische Schwingungen, beispielsweise in Form von Schall, welche von der ersten und zweiten Rohrleitung 10, 30 ausgehen können. Durch Verwendung des elektrisch nicht leitenden Kautschukmaterials ist eine elektrische Entkopplung ebenfalls möglich.

Da die Anschlussstützelemente 21, 21' und die Pressverbindungsflansche 100, 300 der Pressverbindungsanschlüsse 10, 30 den Dichtring 200, 200' einklemmen, können die Anschlussstützelemente 21, 21' nur über die Fittingschlauchabschnitte 201, 201' lösbar gestülpt angeordnet werden.

### Bezugszeichenliste

- 0: Pressfittingsystem
- 1: erster Rohranschluss 10 erster Pressverbindungsanschluss 100 Pressverbindungsflansch 101 umlaufende Rippe / erhabener Dichtvorsprung 11 erste Rohrleitung
- 2: Rohrleitungsfitting (demontierbar) 20 Schwingungskompensator (elastisch) 200 Dichtring 201 Fittingschlauchabschnitt 202 elastischer Balg (Mehrfachbalg) 21 Anschlussstützelement (ringförmig) 210 Aussengewinde 211 Anschlussflansch L Längsachse
- 3: zweiter Rohranschluss 30 zweiter Pressverbindungsanschluss 300 Pressverbindungsflansch 301 umlaufende Rippe / erhabener Dichtvorsprung 31 zweite Rohrleitung
- 4: Überwurfmutter 40 Innengewinde 41 Rand

## Patentansprüche

1. Pressfittingsystem (0) mit einem Rohrleitungsfitting (2) zur indirekten Verbindung eines ersten Rohranschlusses (1) mit einem zweiten Rohranschluss (3)via einen Schwingungskompensator (20), der mit einem elastischen Balg (202) und in Längsrichtung (L) beidseitig versetzt jeweils einen Fittingschlauchabschnitt (201, 201') und einen daran angeformten Dichtring (200, 200') besteht, umfassend Anschlussstützelemente (21, 21'), wobei Pressverbindungen zwischen den ersten und zweiten Anschlussstützelementen (21, 21'), die auf den Fittingsschlauchabschnitten (201, 201') lösbar gestülpt angeordnet sind, und mit einem ersten und zweiten Pressverbindungsflansch (100, 300) an einem ersten und zweiten Pressverbindungsanschluss (10, 30) in Richtung der Längsrichtung (L) des Rohrleitungsfittings (2) erreichbar sind, wobei die ersten und zweiten Pressverbindungsanschlüsse (10, 30) endständig unlösbar an den Rohranschlüssen (1, 3) angeordnet sind, wobei mittels jeweils einer Überwurfmutter (4) mit Innengewinde (40) die ersten und zweiten Anschlussstützelemente (21, 21'), die ein Aussengewinde (210) aufweisen, in Längsrichtung (L) gegen den ersten und zweiten Pressverbindungsflansch (100, 300) pressbar sind, und dabei der Dichtring (200, 200') zwischen einem Anschlussflansch (211) des Anschlussstützelementes (21, 21') und dem Pressverbindungsflansch (100, 300) des Pressverbindungsanschlusses (10, 30) einklemmbar lagerbar ist, wobei die Überwurfmutter (4) eine Wirkverbindung zwischen Pressverbindungsflansch (100, 300) und Anschlussstützelement (21, 21') erzielt und eine lösbare Verbindung der Flanschverbindung gewährleistet.

2. Pressfittingsystem (0) nach Anspruch 1, wobei der Schwingungskompensator (20) einstückig aus einem Kautschukmaterial, insbesondere aus einem Synthesekautschuk wie Nitrilkautschuk, ChloroprenKautschuk oder einem Ethylen-Propylen-Dien-Kautschuk hergestellt ist.

3. Pressfittingsystem (0) nach einem der vorhergehenden Ansprüche, wobei die Dichtringe (200, 200') radial von der Längsachse (L) der Fittingschlauchabschnitte (201, 201') wegweisend abgekröpft verlaufend angeordnet sind.

4. Pressfittingsystem (0) nach einem der vorhergehenden Ansprüche, wobei der Balg (202) als Mehrfachbalg, insbesondere als Doppelbalg ausgeführt ist.

5. Pressfittingsystem (0) nach einem der vorhergehenden Ansprüche, wobei der Dichtring (200, 200') derart elastisch verformbar ist, dass eine umlaufende Rippe (101) am Pressverbindungsflansch (100) in den Dichtring (200, 200') einpressbar ist.

6. Pressfittingsystemnach einem der vorhergehenden Ansprüche , **dadurch gekennzeichnet, dass** der erste Pressverbindungsanschluss (10) einen Pressverbindungsflansch (100) und der zweite Pressverbindungsanschluss (30) einen Pressverbindungsflansch (300) aufweisen, welche jeweils mit einer umlaufenden Rippe (101, 301) ausgestattet sind, sodass diese umlaufenden Rippen (101, 301) mit den Dichtringen (200, 200') in Eingriff bringbar sind.

7. Pressfittingsystem nach Anspruch 1, wobei die Überwurfmutter (4) ein Innengewinde (40) aufweist, welches mit dem Aussengewinde (210) des Anschlussstützelements (21, 21') schraubbar wirkverbindbar ist, wobei ein Rand (41) der Überwurfmutter (4) den Pressverbindungsflansch (100) des Pressverbindungsanschlusses (10, 30) in Richtung Anschlussstützelement (21, 21') parallel zur Längsachse (L) unter elastischer Verformung des Dichtringes (200) presst und in Position hält.

## Claims

1. A pressfitting system (0) with a pipeline fitting (2) for indirectly connecting a first pipe connection (1) to a second pipe connection (3) via a vibration compensator (20) that consists of an elastic bellows (202) and a respective tubular fitting section (201, 201'), which has a sealing ring (200, 200') integrally formed thereon and is arranged offset to both sides of the bellows in the longitudinal direction (L), comprising connection support elements (21, 21'), wherein compression joints can be produced in the longitudinal direction (L) of the pipeline fitting (2) between the first and second connection support elements (21, 21'), which are separably put over the tubular fitting sections (201, 201'), with a first and second compression joint flange (100, 300) on a first and second compression joint connector (10, 30), wherein the first and second compression joint connectors (10, 30) are terminally arranged on the pipe connections (1, 3) in an inseparable manner, wherein the first and second connection support elements (21, 21') have an external thread (210) and can be pressed against the first and second compression joint flange (100, 300) in the longitudinal direction (L) by means of a respective union nut (4) having an internal thread (40) such that the sealing ring (200, 200') can in the process be clamped between a connecting flange (211) of the connection support element (21, 21') and the compression joint flange (100, 300) of the compression joint connector (10, 30), and wherein the union nut (4) produces a functional connection between the compression joint flange (100, 300) and the connection support element (21, 21') and ensures a separability of the flange connection.

2. The pressfitting system (0) according to claim 1, wherein the vibration compensator (20) is realized in one piece and made of a rubber material, particularly a synthetic rubber such as nitrile rubber, chloroprene rubber or ethylene-propylene-diene rubber.

3. The pressfitting system (0) according to one of the preceding claims, wherein the sealing rings (200, 200') are arranged such that they radially extend away from the longitudinal axis (L) of the tubular fitting sections (201, 201') at a right angle.

4. The pressfitting system (0) according to one of the preceding claims, wherein the bellows (202) is realized in the form of a multiple bellows, particularly a double bellows.

5. The pressfitting system (0) according to one of the preceding claims, wherein the sealing ring (200, 200') can be elastically deformed in such a way that a circumferential rib (101) on the compression joint flange (100) can be pressed into the sealing ring (200, 200').

6. The pressfitting system according to one of the preceding claims, **characterized in that** the first compression joint connector (10) has a compression joint flange (100) and the second compression joint connector (30) has a compression joint flange (300), wherein said compression joint flanges are respectively equipped with a circumferential rib (101, 301) such that these circumferential ribs (101, 301) can be engaged with the sealing rings (200, 200').

7. The pressfitting system according to claim 1, wherein the union nut (4) has an internal thread (40) that can be screwed on and thereby functionally connected to the external thread (210) of the connection support element (21, 21'), wherein an edge (41) of the union nut (4) presses the compression joint flange (100) of the compression joint connector (10, 30) in the direction of the connection support element (21, 21') parallel to the longitudinal axis (L) such that the sealing ring (200) is elastically deformed and holds the compression joint flange in position.

## Revendications

1. Système de raccord à sertir (0), pourvu d'un raccord de tuyauterie (2), destiné à assembler indirectement un premier raccord de tuyau (1) avec un deuxième raccord de tuyau (3) via un compensateur de vibrations (20), qui est constitué d'un soufflet (202) élastique et décalé de part et d'autre dans la direction longitudinale (L), de respectivement un tronçon de flexible de raccord (201, 201') et d'une bague d'étanchéité (200, 200') surmoulée sur celui-ci, comprenant des éléments de soutien du raccord (21, 21'), qui sont placés en étant rabattus de manière amovible sur les tronçons de flexible de raccord (201, 201') et qui sont susceptibles d'être obtenus à l'aide d'une première et d'une deuxième brides (100, 300) d'assemblage serti sur un premier et deuxième raccords par assemblage serti (10, 30) dans la direction de la direction longitudinale (L) du raccord de tuyauterie (2), le premier et le deuxième raccords par assemblage serti (10, 30) étant placés finalement de manière inamovible sur les raccords de tuyaux (1, 3), au moyen de chaque fois un écrou de raccordement (4) pourvu d'un taraudage (40), les premiers et deuxièmes éléments de soutien du raccord (21, 21'), qui comportent un filetage (210) étant susceptibles d'être sertis dans la direction longitudinale (L) contre la première et la deuxième brides (100, 300) d'assemblage serti, et à cet effet, la bague d'étanchéité (200, 200') étant susceptible d'être logée de manière à être enserrée entre une bride de raccord (211) de l'élément de soutien du raccord (21, 21') et la bride d'assemblage serti (100, 300) du raccord par assemblage serti (10, 30), l'écrou de raccordement (4) provoquant une liaison active entre la bride d'assemblage serti (100, 300) et l'élément de soutien du raccord (21, 21') et assurant un assemblage amovible de l'assemblage par brides.

2. Système de raccord à sertir (0) selon la revendication 1, le compensateur de vibrations (20) étant fabriqué en monobloc à partir d'une matière caoutchouteuse, notamment d'un caoutchouc de synthèse, comme un caoutchouc nitrile, un caoutchouc chloroprène ou un caoutchouc éthylène-propylène-diène.

3. Système de raccord à sertir (0) selon l'une quelconque des revendications précédentes, les bagues d'étanchéité (200, 200') étant placées en s'écoulant en étant coudées en éloignement dans la direction radiale de l'axe longitudinal (L) des tronçons de flexible de raccord (201, 201').

4. Système de raccord à sertir (0) selon l'une quelconque des revendications précédentes, le soufflet (202) étant conçu sous la forme d'un soufflet multiple, notamment d'un double soufflet.

5. Système de raccord à sertir (0) selon l'une quelconque des revendications précédentes, la bague d'étanchéité (200, 200') étant élastiquement déformable de telle sorte qu'une nervure (101) périphérique sur la bride d'assemblage serti (100) soit susceptible d'être sertie dans la bague d'étanchéité (200, 200').

6. Système de raccord à sertir selon l'une quelconque des revendications précédentes, **caractérisé en ce que** le premier raccord par assemblage serti (10) comporte une bride d'assemblage serti (100) et le deuxième raccord par assemblage serti (30) comporte une bride d'assemblage serti (300), lesquelles sont équipées respectivement d'une nervure (101, 301) périphérique, de telle sorte que lesdites nervures (101, 301) périphériques soient susceptibles d'être amenées en engagement avec les bagues d'étanchéité (200, 200').

7. Système de raccord à sertir selon la revendication 1, l'écrou de raccordement (4) comportant un taraudage (40), lequel est susceptible d'être amené en liaison active par vissage avec le filetage (210) de l'élément de soutien du raccord (21, 21'), un bord (41) de l'écrou de raccordement (4) sertissant la bride d'assemblage serti (100) du raccord par assemblage serti (10, 30) dans la direction de l'élément de soutien du raccord (21, 21') à la parallèle de l'axe longitudinal (L), sous déformation élastique de la bague d'étanchéité (200) et la maintenant en position.
